# EUROPEAN PATENT APPLICATION

(11) **EP 1 528 467 A2**
(43) Date of publication of application: **04.05.2005**
(21) Application number: 04254855.2
(22) Date of filing: 12.08.2004
(51) Int. Cl.: G06F 9/46

(54) **Method and system for delivery of data objects to components in a distributed system, using multiple data type representations**

(30) Priority: 30.09.2003 US 674323
(71) Applicant: Agilent Technologies Inc, Palo Alto, CA 94303-0870 (US)
(72) Inventor: Liu, Jerry J., Sunnyvale California 94086 (US); Purdy ,Glen L., Jr., Snohomish Washington 98290 (US); Burch, Jefferson B., Palo Alto California 94306 (US)
(74) Representative: Exell, Jonathan Mark

(57) **Abstract**

A node (600) within a network receives a data object (100) and generates a generic container data type representation (104). Data in the received data object (100) is mapped into one or more fundamental data items, such as integers, floats, and bytes, and then placed within the container data type representation (104). The container data type representation (104) is assigned an annotation based on the contents within the container. The node (600) determines whether a native data type representation (102) corresponding to the container data type representation (104) is available. If a native data type representation (102) is available, the node (600) transforms the data object (100) into a native data type representation (102). The node (600) then transmits the native data type representation (102) to a component (604) residing within the node (600). If a native data type representation (102) is unavailable, the node (600) transmits the container data type representation (102), or transmits the container data type representation (102) and an incomplete native data type representation, to a component (604).

## Description

### Technical Field:

The invention relates generally to distributed software systems and networks, and more particularly to using text-based encoding to transfer data objects across networks. Still more particularly, the invention relates to a method and system for using multiple data type representations to deliver data objects to components in a distributed system.

### Background:

Recent and ongoing innovations in decentralized networks and distributed systems have resulted in the increased use of text-based encoding to transfer data objects across networks. A data object typically includes a collection of data items, and may also include behavior or code associated with particular data. In some programming languages, such as C++ and Java, a data object is also "typed." The "type" of a data object specifies the data items that the object contains as well as the operations it can perform. A text representation of a data object is utilized to transfer the information in the data object over a network. Each node in a network must be able to convert the text representation into a format that can be used by one or more components residing within that node. Nodes typically include various types of computing devices.

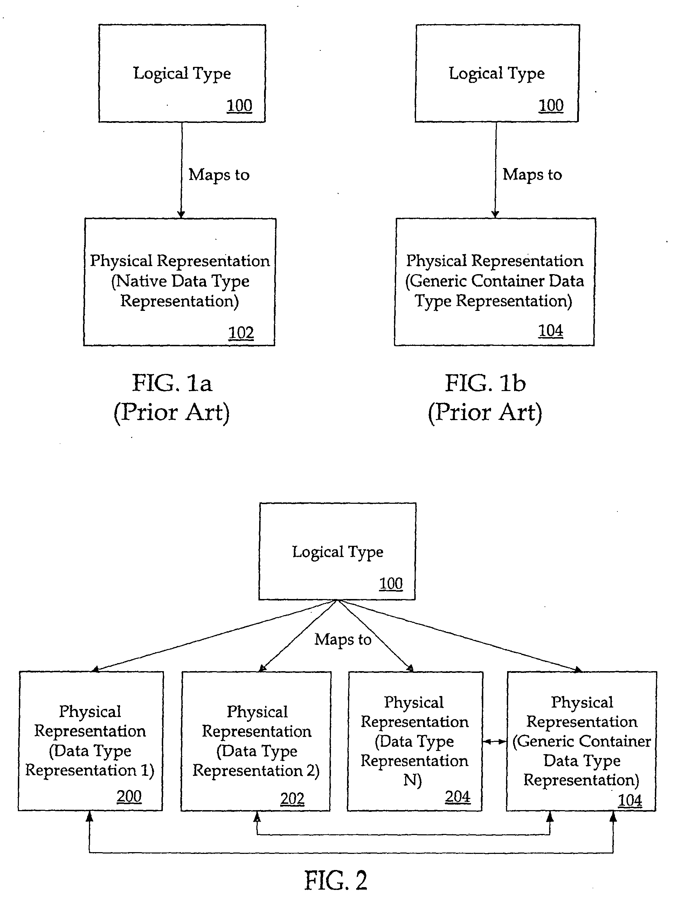

**FIG. 1a** is a data flow diagram of a first type of data object conversion according to the prior art. A data object of a particular type (logical type 100) is converted to a native data type representation 102. A native data type representation refers to a native format, such as a native binary format, that is usable by the underlying software environment. One example would be the Java byte code that is executable on Java virtual machines. Each distinct type of data object can have its own unique binary representation, and a node in a distributed network includes instructions on how to represent the data objects in a native format.

Unfortunately, in a loosely coupled distributed network, such as a distributed measurement system, a receiving node within the network may be built and deployed before a sending node is produced. The newer sending node, when deployed, may contain new data object types not known to the existing nodes in the network. Consequently, the older receiving node may not include all of the necessary instructions to convert all of the logical types 100 received from the newer sending node into native data type representations 102. The older receiving node must be retrofitted with additional instructions in order to receive data objects from the newer sending node.

To avoid the need to retrofit nodes in a network, some distributed systems use a second type of data object conversion, which is shown in the data flow diagram of **FIG. 1b.** Each node in the network utilizes a fixed set of object encoding to convert a logical type 100 into to a generic container data type representation 104. In this representation scheme, a data object is represented by aggregating its constituent fundamental data items within a known type of container data structure such as an array or vector. One example of a data model that utilizes a generic container data type representation is the IEEE 1451.1 specification. By using a fixed set of fundamental data items to create any arbitrary data object, the problem of introducing new data types into an established network is avoided. Fundamental data items include integers, floats, and bytes that are recognized by computing devices.

The generic container data type representation 104, however, does not provide the same design capabilities and support that a native data type representation 102 provides, since the generic container data type representation 104 cannot be typed at compile time. Consequently, systems that support the generic container data type representation lose the ability for static type checking. Additionally, the same container type is used to represent multiple logical data types, so these systems cannot associate type-specific behavior with the containers.

### Summary:

In accordance with the invention, a method and system for using multiple data type representations to deliver data objects to components in a distributed system is provided. A node within a network receives a data object and generates a generic container data type representation. Data in the received data object are mapped into one or more fundamental data items, such as integers, floats, and bytes, and then placed within a container such as an array. The container data type representation is assigned an annotation, or identifier, based on the contents within the container. The node then determines whether a native data type representation that corresponds to the container data type representation is available on the node. If a native data type representation is available, the node transforms the container data type representation into a native data type representation and transmits the native data type representation to a component residing within the node.

In one embodiment in accordance with the invention, the node transmits the container data type representation to a component when a native data type representation does not exist within the node. In another embodiment in accordance with the invention, the node determines whether some or all of the data in the container data type representation can be transformed into an incomplete native data type representation when a native data type representation is not available. If data cannot be transformed into an incomplete native data type representation, the node transmits the container data type representation to a component. If, however, data can be transformed into an incomplete native data type representation, the node transforms the known data into the incomplete native data type representation. The node then transmits the incomplete native data type representation to a component residing within the node. The node may also transmit the container data type representation to the component along with the incomplete native data type representation.

### Brief Description of the Drawings:

The invention will best be understood by reference to the following detailed description of embodiments in accordance with the invention when read in conjunction with the accompanying drawings, wherein:
**FIG. 1a** is a data flow diagram of a first type of data object conversion according to the prior art;
**FIG. 1b** is a data flow diagram of a second type of data object conversion according to the prior art;
**FIG. 2** is a data flow diagram in an embodiment in accordance with the invention;
**FIG. 3** is a flowchart of a method for receiving data objects in a first embodiment in accordance with the invention;
**FIG. 4** is a flowchart of a method for receiving data objects in a second embodiment in accordance with the invention;
**FIG. 5** is a flowchart of a method for transmitting data objects in a third embodiment in accordance with the invention;
**FIG. 6** is a block diagram of a first node in accordance with the invention;
**FIG. 7** is a block diagram of a second node in accordance with the invention; and
**FIG. 8** is a block diagram of a third node in accordance with the invention.

### Detailed Description:

The invention relates to a method and system for using multiple type representations to deliver data objects to components in a distributed system. The following description is presented to enable one skilled in the art to make and use the invention, and is provided in the context of a patent application and its requirements. Various modifications to the disclosed embodiments will be readily apparent to those skilled in the art, and the generic principles herein may be applied to other embodiments. Thus, the invention is not intended to be limited to the embodiments shown, but is to be accorded the widest scope consistent with the appended claims and with the principles and features described herein.

With reference now to the figures and in particular with reference to FIG. 2, there is shown a data flow diagram in an embodiment in accordance with the invention. A logical data type 100 is mapped into multiple physical type representations. The multiple physical type representations include a generic container data type representation 104 and different native data type representations 202, 204, 206 in this embodiment in accordance with the invention. The different native data type representations include, but are not limited to, C++ object types and Java object types. Each native data type representation can be transformed into the container data type representation, and the container data type representation can be transformed into one or more native data type representations.

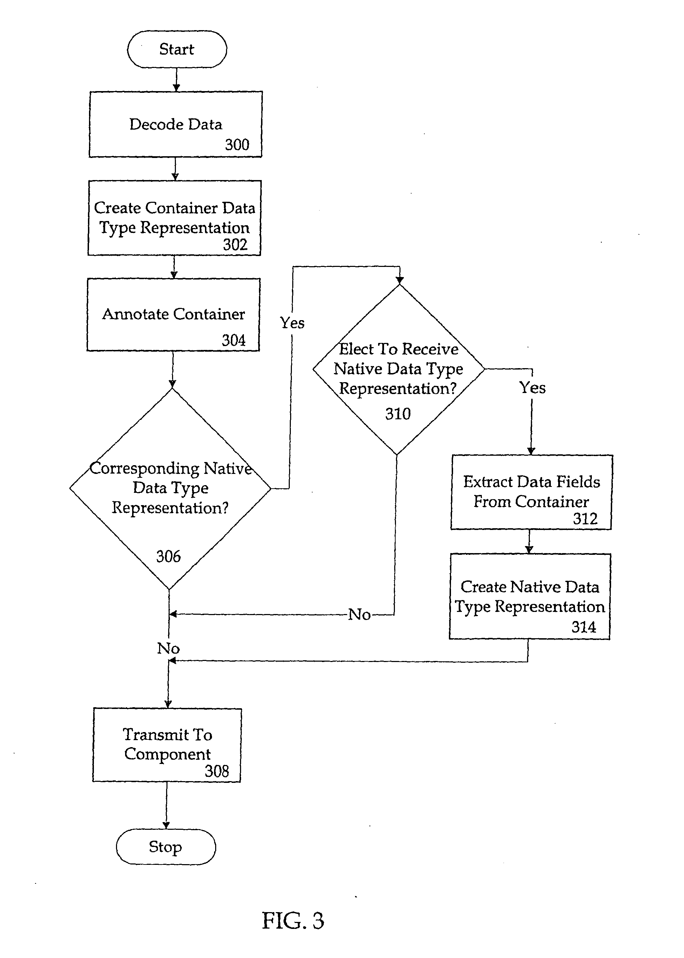

FIG. 3 is a flowchart of a method for receiving data objects in a first embodiment in accordance with the invention. A node receives data and decodes the network transmission format, as shown in block 300. Network transmission formats include, but are not limited to, data frames including a preamble and a payload, where the payload typically includes an aggregation of data objects, and network encoding based on the XML protocol.

An instance of a generic container data type representation is created to hold the data objects, as shown in block 302. The container data type representation is then tagged with an annotation, or identifier, at block 304. The annotation in this embodiment in accordance with the invention is a human readable string to annotate the logical type the container data type represents. Containers that contain the same types and instances of data items are assigned identical annotations, while containers that contain different types and instances of data items are assigned different annotations. Using the annotation and the contents of the container, a determination is then made at block 306 as to whether the node has a native data type representation corresponding to the annotation and container content.

If the node does not have a corresponding native data type representation, the process passes to block 308 where the container data type representation is transmitted to a component within the node. A component includes any program or device that can access or utilize the data items within a container data type representation and/or a native data type representation. A component can elect to accept data in a container data type representation or in a native data type representation in this embodiment in accordance with the invention.

For example, in those embodiments in accordance with the invention where a component is able to act on a variety of data, a system designer may prefer the component accept data in a generic container data type representation. In other embodiments in accordance with the invention a component may be able to act on a specific type of data only, or it may require a behavior or code associated with a particular data. In these embodiments, a system designer may prefer a component accept data in a native data type representation.

Referring again to block 306, if the node does have a native data type representation that corresponds to the annotation and container content, a determination is made at block 310 as to whether a component within the node elects to receive the native data type representation. If not, the container data type representation is transmitted to the component at block 308. If, however, the component does elect to receive the native data type representation, the data fields in the container are extracted and transformed into a native data type representation (blocks 312 and 314). The native data type representation is then transmitted to a component at block 308.

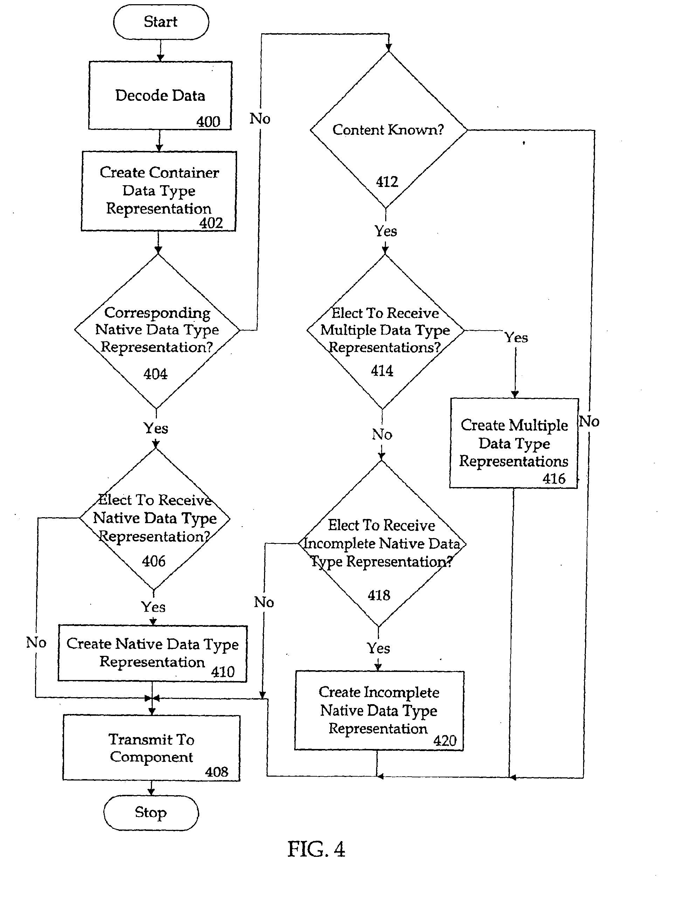

FIG. 4 is a flowchart of a method for receiving data objects in a second embodiment in accordance with the invention. A node receives data and decodes the network transmission format, as shown in block 400. An instance of a generic container data type representation is created to hold the data objects and the container data type representation is annotated, as shown in block 402.

Using the annotation and the contents of the container data type representation, a determination is then made at block 404 as to whether the node has a native data type representation corresponding to the annotation and container content. If the node has a native data type representation that corresponds to the annotation and container content, a determination is made at block 406 as to whether a component within the node has elected to receive the native data type representation. If not, the container data type representation is transmitted to the component at block 408. If, however, a component has elected to receive the native data type representation, the data fields in the container are extracted and transformed into the native data type representation (block 410). The native data type representation is then transmitted to the component (block 408).

Returning to block 404, if the node does not have a native data type representation that corresponds to the annotation and container content, a determination is made at block 412 as to whether the node knows some or all of the content in the container data type representation. Content is "known" by a node when some or all of the data fields can be transformed into an incomplete native data type representation. An incomplete native data type representation is a representation where all of the data fields in a native data type representation are not initialized. If the node does not know some or all of the content, the process passes to block 408 where the container data type representation is transmitted to a component.

If, however, the node does know some or all of the container content, a determination is made at block 414 as to whether a component elects to receive multiple data type representations. If a component does elect to receive multiple data type representations, all or part of the content that is known by the node is transformed to an incomplete native data type representation (block 416). The container data type representation continues to store all of the content in this embodiment in accordance with the invention. The multiple data type representations (i.e., the container data type representation and the incomplete native data type representation) are then transmitted to the component (block 408).

Returning again to block 414, if a component does not elect to receive multiple data type representations, a determination is made at block 418 as to whether the component prefers to receive an incomplete native data type representation. If the component does elect to receive an incomplete native data type representation, all or part of the container content that is known by the node is transformed to an incomplete native data type representation (block 420). The incomplete native data type is then transmitted to the component. If, however, the component does not prefer to receive an incomplete native data type representation, the container data type representation is transmitted to the component.

The invention, however, is not limited to the embodiments illustrated in FIG. 3 and FIG. 4. Other embodiments in accordance with the invention may omit some of the steps shown in these figures. Furthermore, some or all of the steps may be implemented in sequences different from the sequence depicted in FIG. 3 and FIG. 4.

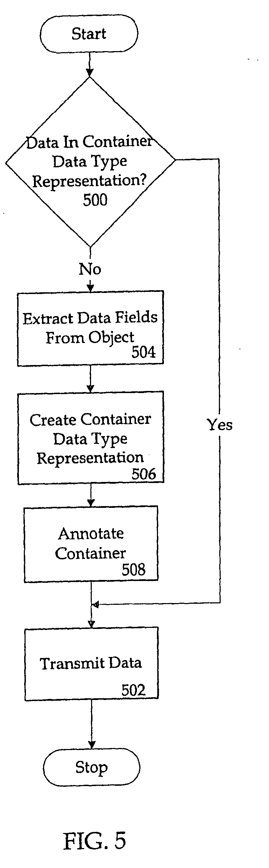

FIG. 5 is a flowchart of a method for transmitting data objects in a third embodiment in accordance with the invention. A determination is made at block 500 as to whether the data is stored in a generic container data type representation. The container data type representation is transmitted over a network if the data is held in a container data type representation (block 502).

If the data is not held in a generic container data type representation, however, the process passes to block 504 where the data fields are extracted from the object. A generic container data type representation is created to hold the data and the container data type representation is annotated (blocks 506 and 508). The annotation in this embodiment in accordance with the invention is a human readable string to annotate the logical type the container data type represents. The container data type representation is then transmitted over a network (block 502).

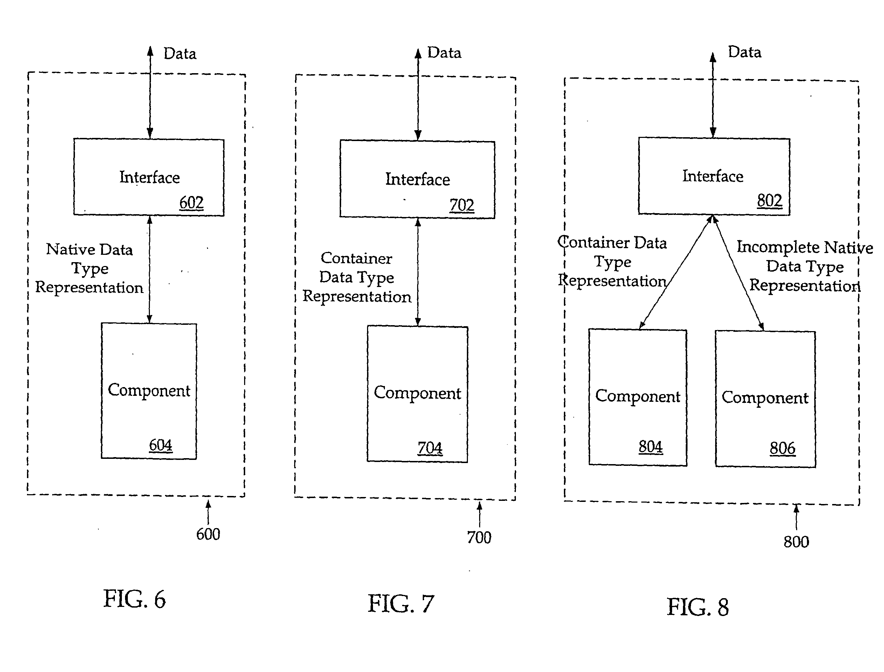

Referring now to FIG. 6, there is shown a block diagram of a first node in accordance with the invention. Node 600 includes an interface 602 and a component 604. Node 600 receives data from a network and interface 602 creates a generic container data type representation to hold the data. Interface 602 then determines whether node 600 has a native data type representation that corresponds to the container data type representation. In this embodiment in accordance with the invention, node 600 does have a native data type representation that corresponds to the container data type representation. Interface 602 extracts the data fields from the container data type representation and transforms the data fields into a native data type representation. Interface 602 then transmits the native data type representation to component 604.

FIG. 7 is a block diagram of a second node in accordance with the invention. Node 700 includes an interface 702 and a component 704. Node 700 receives data from a network and interface 702 creates a generic container data type representation to hold the data. Interface 702 then determines whether node 700 has a native data type representation that corresponds to the container data type representation. In this embodiment in accordance with the invention, node 700 does not have a native data type representation that corresponds to the container data type representation. Node 700 then determines whether it knows some or all of the data in the container data type representation. Node 700, however, does not know any of the content in the container data type representation. Therefore, interface 702 transmits the container data type representation to component 704.

Referring now to FIG. 8, there is shown a block diagram of a third node in accordance with the invention. Node 800 includes an interface 802 and two components 804, 806. Node 800 receives data from the network and interface 802 creates a generic container data type representation to hold the data. Node 800 does not have a native data type representation that corresponds to the container content, but node 800 does know some of the content in the container data type representation. Component 804 has elected to receive data in the generic container data type representation, so interface 802 transmits the container data type representation to component 804. Unlike component 804, component 806 has elected to receive an incomplete native data type representation. So interface 802 extracts the known data fields in the container and transforms these data fields into an incomplete native data type representation. Interface 802 then transmits the incomplete native data type to component 806.

## Claims

1. A system for delivering a data object (100) using multiple data type representations, comprising:
an interface (602) receiving the data object (100) and mapping data fields in the data object (100) into a first data type representation, wherein the interface (602) transforms the first data type representation into a second data type representation when the second data type representation is available; and
a component (604) receiving the first data type representation when the second data type representation is not available and receiving the second data type representation when the second data type representation is available.

2. The system of claim 1, wherein the interface (602) transmits the first data type representation to the component (604) when the second data type representation is not available and transmits the second data type representation to the component (604) when the second data type representation is available.

3. The method of claim 1 or claim 2, wherein the first data type representation comprises a container data type representation (104) and the second data type representation comprises a native data type representation (102).

4. The system of claim 3, wherein the native data type representation (102) corresponds to the container data type representation (104).

5. The system of claim 3, wherein the native data type representation (102) comprises an incomplete native data type representation.

6. A method for receiving a data object (100), comprising:
generating a first data type representation and mapping data fields in the data object (100) into the first data type representation;
determining if a second data type representation corresponding to the first data type representation is available; and
transforming the first data type representation into the second data type representation when the second data type representation is available.

7. The method of claim 6, wherein the transforming of the first data type representation into the second data type representation when the second data type representation is available comprises transforming the first data type representation into the second data type representation when the second data type representation is available and a component (604) elects to receive the second data type- representation.

8. The method of claim 6 or claim 7, further comprising:
determining if the first data type representation can be transformed into an incomplete second data type representation when the second data type representation is not available; and
transforming the first data type representation into the incomplete second data type representation when the first data type representation can be transformed into the incomplete second data type representation.

9. The method of claim 8, further comprising:
transmitting the second data type representation to a component (604) when the second data type representation is available and the component (604) elects to receive the second data type representation;
transmitting the incomplete second data type representation to the component (604) when the component (604) elects to receive the incomplete second data type representation; and
transmitting the first data type representation to the component (604) when the second data type representation is not available and the first data type representation cannot be transformed into the incomplete second data type representation.

10. The method of claim 9, wherein transmitting the incomplete second data type representation to the component (604) when the component (604) elects to receive the incomplete second data type representation comprises transmitting the first data type representation and the incomplete second data type representation to the component (604) when the component (604) elects to receive the incomplete second data type representation.
